(19)

Europäisches
Patentamt
European
Patent Office
Office européen
des brevets

(11)  EP 1 780 510 B1

(12)  **EUROPEAN PATENT SPECIFICATION**

(45) Date of publication and mention
of the grant of the patent:
**09.01.2013 Bulletin 2013/02**

(51) Int Cl.:
***G01C 21/36*** *(2006.01)*      ***G08G 1/0968*** *(2006.01)*
***G08G 1/0969*** *(2006.01)*

(21) Application number: **06123151.0**

(22) Date of filing: **30.10.2006**

(54) **Route guidance system and route guidance method**

Routenführungssystem und Routenführungsverfahren

Système de guidage d'itinéraire et procédé de guidage d'itinéraire

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.10.2005 JP 2005317760**

(43) Date of publication of application:
**02.05.2007 Bulletin 2007/18**

(73) Proprietor: **Aisin AW Co., Ltd.**
**Fujii-cho**
**Anjo-shi,**
**Aichi 444-1192 (JP)**

(72) Inventors:
• **Nakayama, Takaaki**
**Okazaki**
**Aichi 444-8564 (JP)**

• **Oonishi, Shino**
**Okazaki**
**Aichi 444-8564 (JP)**
• **Takeuchi, Kensuke**
**Okazaki**
**Aichi 444-8564 (JP)**

(74) Representative: **TBK**
**Bavariaring 4-6**
**80336 München (DE)**

(56) References cited:
**EP-A1- 0 803 853      EP-A2- 1 072 863
US-A1- 2001 049 582**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

The present invention relates to a route guidance system and a route guidance method.

Heretofore, with a navigation system device, for example, an arrangement has been made wherein the current location of a vehicle is detected by GPS (Global Positioning System), map data is read out from a data recording unit, a map screen is displayed on a display unit, and the vehicle location representing the current location of the vehicle, the map around the vehicle, and so forth are displayed on the map screen. Accordingly, a driver can drive a vehicle in accordance with the vehicle location and so forth displayed on the map screen.

Also, upon the driver inputting a destination, and setting search conditions, route-searching processing is performed based on the search conditions, a route from a departing location represented with the current location to the destination is searched in accordance with the map data. Subsequently, the route which has been searched, i.e., the searched route is displayed on the map screen together with the vehicle location, and guidance of the searched route, i.e., route guidance is performed. Accordingly, the driver can drive the vehicle along the displayed searched route.

Incidentally, with the route guidance, an arrangement is made wherein a predetermined point, e.g., in the event that it is necessary to turn the vehicle to the right/left at an intersection, before the vehicle reaches the intersection, i.e., the guidance intersection, e.g., voice is output to perform route guidance. Accordingly, one or more route guidance points are set at points apart from the guidance intersection only each predetermined distance before the guidance intersection on the searched route, and upon the vehicle reaching each of the route guidance points, route guidance of contents which are determined for each of the route guidance points is output with voice (e.g., see Japanese Unexamined Patent Application Publication No. 7-98233).

Also, with a navigation device capable of performing route guidance for each lane, in the event that multiple lanes are formed on a road entering the guidance intersection (hereinafter, referred to as entrance road), with route guidance, a predetermined lane is recommended as the recommended lane, the vehicle is guided from the current driving lane, i.e., the driving lane to the recommended lane.

However, with the above conventional navigation device, even at a guidance intersection which can be easily passed through, and where it is unnecessary to perform route guidance for each lane, route guidance is output with voice, so that route guidance becomes complicated.

The US 2001/0049582 A1 discloses a vehicular navigation system which provides a recommended travel route. A control unit checks for the number of each road branching from an entering road of the travel route at an intersection when the entering road has a plurality of traffic lanes. If an exiting road of the travel route from the intersection has a largest number of traffic lanes among the branching roads, no intersection guidance is provided. If the exiting road has a smaller number of traffic lanes, an intersection guidance is provided. This intersection guidance may include guidance of turn direction and guidance of traffic lane to be taken.

The EP-A-0 803 853 discloses a navigation system for vehicles. Lane change guidance information is output based on data for the next guide intersection on a route calculated in advance and on detection of the driving lane in which the vehicle is currently driven. The system includes present position detection, direction of advance determination for guide intersections along the preset route, driving lane determination, and guidance information output for instructing the driver when direction to be taken at a guide intersection does not match the current driving lane, whereby adequate guidance information is provided the driver regarding lane changes when the vehicle is driven on a road having two or more lanes.

The EP-A-1 072 863 discloses an image processing apparatus for a navigation system in which unnecessary guidance can be avoided in case that a vehicle is travelling on an appropriate traffic lane.

It is an object of the present invention to provide a route guidance system and a route guidance method which can solve the problems of the above conventional navigation device, and simplify route guidance.

To this end, according to a first aspect of the present invention, a route guidance system as defined in claim 1 is provided.

According to a second aspect of the present invention, a route guidance method as defined in claim 5 is provided.

According to the present invention, in the event that lane planning can be readily performed even though a guidance intersection performs no lane guidance, lane guidance is prevented from being performed at a predetermined route guidance point, whereby route guidance can be simplified.

Fig. 1 is a diagram illustrating a navigation system according to an embodiment of the present invention;

Fig. 2 is an explanatory diagram for typifying a guidance intersection according to an embodiment of the present invention;

Fig. 3 is a flowchart illustrating operation of guidance processing means according to an embodiment of the present invention;

Fig. 4 is a conceptual diagram illustrating a first example of a guidance intersection according to an embodiment of the present invention;

Fig. 5 is a detailed diagram illustrating the first example of a guidance intersection according to an embodiment of the present invention;

Fig. 6 is a reference diagram of lane guidance regarding the first example of a guidance intersection;

Fig. 7 is a diagram illustrating lane guidance regarding the first example of a guidance intersection according to an embodiment of the present invention;

Fig. 8 is a conceptual diagram illustrating a second example of a guidance intersection according to an embodiment of the present invention;

Fig. 9 is a detailed diagram illustrating the second example of a guidance intersection according to an embodiment of the present invention;

Fig. 10 is a reference diagram of lane guidance regarding the second example of a guidance intersection;

Fig. 11 is a diagram illustrating lane guidance regarding the second example of a guidance intersection according to an embodiment of the present invention;

Fig. 12 is a first diagram illustrating route guidance using simplification processing regarding a third example of a guidance intersection according to an embodiment of the present invention; and

Fig. 13 is a second diagram illustrating route guidance using simplification processing regarding the third example of a guidance intersection according to an embodiment of the present invention.

Hereinafter, description will be made in detail regarding embodiments of the present invention with reference to the drawings.

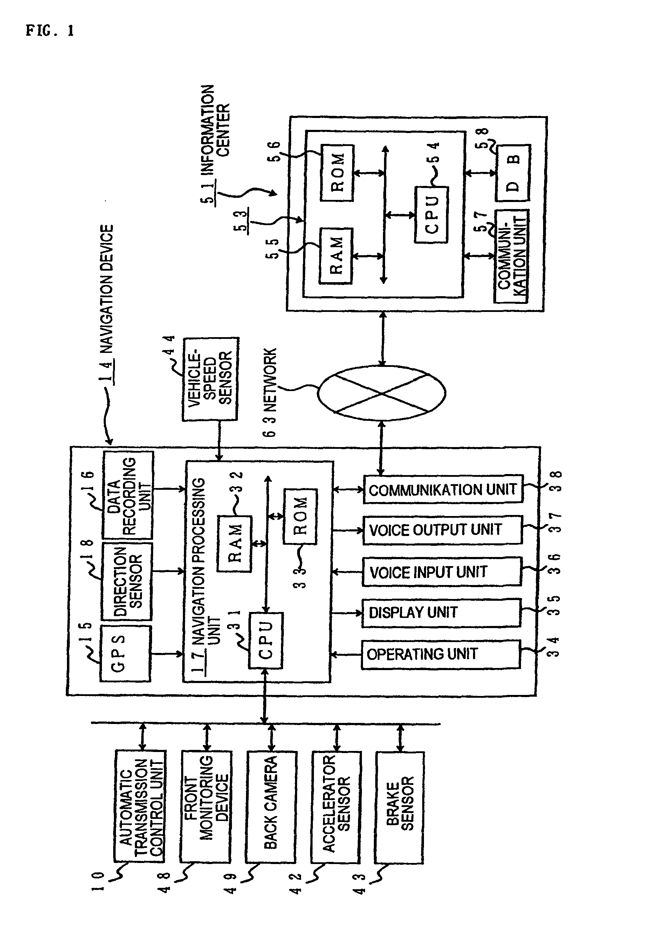

Fig. 1 is a diagram illustrating a navigation system according to an embodiment of the present invention.

In the drawing, reference numeral 10 denotes an automatic transmission control unit serving as a powertrain control unit. The automatic transmission control unit 10 performs control of a powertrain for performing transmission with a predetermined transmission gear ratio, e.g., a continuously variable transmission (CVT) serving as an automatic transmission, a stepped transmission (automatic transmission), an electrically-driven driving device, and so forth.

Reference numeral 14 denotes an information terminal, e.g., a navigation device serving as an in-vehicle device mounted on a vehicle, 63 denotes a network, and 51 denotes an information center serving as an informant. A navigation system comprises an automatic transmission control unit 10, a navigation device 14, a network 63, an information center 51, and so forth.

The navigation device 14 comprises a GPS sensor serving as a current location detection unit for detecting the current location of a vehicle, a data recording unit 16 serving as an information recording unit in which various types of information are recorded as well as map data, a navigation processing unit 17 for performing various types of calculation processing such as navigation processing and the like based on input information, a direction sensor 18 serving as a direction detection unit for detecting the direction of a vehicle, an operating unit 34 serving as a first input unit for performing predetermined input by a driver serving as an operator performing operations, a display unit 35 serving as a first output unit for performing various types of display using an image displayed on an unshown screen to notify a driver, a voice input unit 36 serving as a second input unit for performing predetermined input using voice, a voice output unit 37 serving as a second output unit for performing various types of display using voice to notify the driver, and a communication unit 38 serving as a transmission/reception unit which functions as a communication terminal. The navigation processing unit 17 is connected with the GPS sensor 15, data recording unit 16, directional sensor 18, operating unit 34, display unit 35, voice input unit 36, voice output unit 37, and communication unit 38.

Also, the navigation processing unit 17 is connected with the automatic transmission control unit 10, a front monitoring device 48, which is attached to a predetermined place of the front end of the vehicle, for monitoring the forward of the vehicle, a back camera (backward monitoring camera) 49, which is attached to a predetermined place of the rear end of the vehicle, serving as an image capturing device for monitoring backwards of the vehicle, and also serving as a backward monitoring device, an accelerator sensor 42 serving as an engine load detection unit for detecting operation of an accelerator pedal by the driver using accelerator opening, a brake sensor 43 serving as a braking detection unit for detecting operation of a brake pedal by the driver using the amount of brake stepping, a vehicle-speed sensor 44 serving as a vehicle-speed detection unit for detecting a vehicle speed S, and so forth. Note that the accelerator sensor 42, brake sensor 43, and so forth make up an operating information detection unit for detecting the operating information of the vehicle by the driver.

The GPS sensor 15 detects the current location on the earth by receiving electric waves generated by a satellite, and also detects the time. With the present embodiment, the GPS sensor 15 is arranged so as to be used as a current-location detection unit, but a distance sensor, steering sensor, altimeter, and so forth can be used independently, or can be used in combination instead of the GPS sensor 15. Also, a gyro sensor, magnetic-field sensor, or the like can be used as the direction sensor 18. With the present embodiment, the direction sensor 18, vehicle-speed sensor 44, and so forth are provided, but in the event of using a GPS sensor including a function for detecting vehicle direction, vehicle speed, and so forth, the direction sensor 18, vehicle-speed sensor 44, and so forth are unnecessary.

The data recording unit 16 includes map database made up of map data files, and map data is recorded in the map database. The map data includes intersection data regarding intersections (branch points), node data regarding nodes, road data regarding road links, search data processed for search, facility data regarding facilities, and so forth, in addition, object feature data regarding object features on roads.

The object features are display objects installed or formed on roads for providing various types of information on driving to a driver, or performing various types of guidance on driving, and comprise display lines, road signs, pedestrian crossings, manholes, traffic signals, and so forth. The display lines include stop lines for stopping vehicles, vehicular lane borderlines for classifying each lane, compartment lines indicating parking spaces, and so forth. The road signs include traffic classification signs indicating the traveling direction of each lane using an arrow, and guidance signs for announcing a temporary stop point beforehand, such as "STOP" and the like, and so forth. The object feature data includes positional information wherein the position of each object feature is represented with coordinates or the like, image information wherein each object feature is represented with an image, and so forth. Note that the temporary stop point includes entrance points to a preferential road from a non-preferential road, railroad crossings, intersections where a red signal flashes, and so forth.

Also, the road data regarding lanes includes lane data serving as lane information comprising the number of lanes, lane numbers assigned for each lane on a road, lane positions, traffic classification signs indicating the traveling direction for each lane, and so forth. Data for outputting predetermined information using the voice output unit 37 is also recorded in the data recording unit 16.

Further, with the data recording unit 16, a statistics database made up of statistics data files, a driving history database made up of driving history data files, and so forth are formed. Statistics data is recorded in a statistics data file, and driving history data is recording in a driving history data file, either of which is recorded as record data.

The statistics data is record of traffic information provided in the past, i.e., history information representing history, which is created by using the traffic information provided in the past by an unshown road traffic information center or the like such as the VICS (Vehicle Information and Communication System) center or the like serving as an informant, road traffic census information serving as data indicating traffic volume using the road traffic census provided by the Ministry of Land, Infrastructure and Transport, the road time-table information provided by the Ministry of Land, Infrastructure and Transport, and so forth independently, or in combination, and subjecting those to industrial process, and statistics processing as necessary. Note that the statistics data can be added with heavy traffic forecast information for forecasting heavy traffic situations, and so forth. In this case, when creating the statistics data, detailed conditions such as date and time, day of the week, weather, various types of event, season, information of facilities (existence of large-sized facilities such as a department store, supermarket, and so forth), and so forth are added to the history information.

The data items of the statistics data comprise a link number regarding each of road links, a direction flag indicating the direction of travel, an information classification indicating the type of information, the degree of heavy traffic for predetermined timing, link duration indicating duration for each predetermined timing when running on each of the road links, average data for every day of the week of the link duration (e.g., day-of-the-week average data), and so forth.

Also, the driving history data, which is collected from multiple vehicles, i.e., a guided vehicle or the other vehicles by the information center 51, is record information indicating the vehicle driving record in the roads where each of the vehicles ran, i.e., driving record, and is calculated as probe data based on driving data, and is accumulated.

The data items of the driving history data comprises link duration for each predetermined timing when running on each of the road links, the degree of heavy traffic for each predetermined timing when running on each of the road links, and so forth. Note that the statistics data can be added with the driving history data. Also, with the present embodiment, the degree of heavy traffic is used as a heavy traffic index indicating the degree of heavy traffic, which is classified into heavy traffic, congestion, and light traffic.

The data recording unit 16 includes unshown disks such as a hard disk, CD, DVD, optical disc, and so forth to record the various types of data, and also includes unshown heads such as read/write head for reading or writing various types of data, and so forth. With the data recording unit 16, a memory card or the like can be used. Note that each of the disks, memory card, and so forth make up an external storage device.

With the present embodiment, the map database, statistics database, driving history database, and so forth are arranged to be formed in the data recording unit 16, but the map database, statistics database, driving history database, and so forth can be formed in the information center 51.

Also, the navigation processing unit 17 comprises a CPU 31 serving as a control device for controlling the entirety of the navigation device 14, and also serving as a computing device, RAM 32 which is used as working memory when the CPU 31 performs various types of computing processing, ROM 33 in which various types of programs for recording various types of data, program, and so forth are recorded as well as a control program, and unshown flash memory which is used to record various types of data, program, and so forth. Note that the RAM 32, ROM 33, flash memory, and so forth make up an internal storage device.

With the present embodiment, various types of programs can be recorded in the ROM 33, and various types of data can be recorded in the data recording unit 16, but the programs, data, and so forth can be recorded in a disk or the like. In this case, the programs, data, and so forth can be read out from the disk or the like to be written in the flash memory. Accordingly, the programs, data, and so forth can be updated by replacing the disk or the like. Also, the control program, data, and so forth of the automatic transmission control unit 10 can be recorded in the disk or the like. Further, the program, data, and so forth can be also received via the communication unit 38 to be written in the flash memory of the navigation processing unit 17.

The operating unit 34 is for correcting the current location at the time of start of travel, inputting a departure location and a destination, inputting passing points, and activating the communication unit 38 by the driver operating the operating unit 34. A keyboard, mouse, and so forth, which are disposed independently from the display unit 35, can be used as the operating unit 34. Also, a touch panel which enables predetermined input operations by touching or clicking an image operating unit such as various types of keys, switches, buttons, or the like displayed with an image on the screen formed on the display unit 35 can be used as the operating unit 34.

A display is used as the display unit 35. On various types of screens formed on the display unit 35 the direction of a vehicle can be displayed as a vehicle direction with the current location of a vehicle, a map, a searched route, the guidance information along the searched route, traffic information, and so forth can be displayed, the distance up to the next intersection in the searched route, and the progressive direction at the next intersection can be displayed, and in addition, the operating guidance, operating menu, and key guidance of the image operating unit, operating unit 34, voice input unit 36, and so forth can be displayed, and the program of an FM multiplex broadcast, and so forth can be displayed.

Also, the voice input unit 36 comprises an unshown microphone and so forth, whereby necessary information can be input by voice. Further, the voice output unit 37 comprises an unshown voice synthesizer, and unshown speakers, and the searched route, guidance information, traffic information, or the like is output from the voice output unit 37, for example, with voice synthesized by the voice synthesizer.

The communication unit 38 includes a beacon receiver for receiving various types of information such as the current traffic information, common information transmitted from the road traffic information center via an electric-wave beacon device, optical beacon device, or the like disposed along a road as an electric-wave beacon, optical beacon, or the like, an FM receiver for receiving such information as an FM multiplex broadcast via an FM broadcasting station, and so forth. Note that the traffic information includes heavy traffic information, restriction information, parking information, traffic accident information, the congestion status information of a rest area, and so forth, and the common information includes news, weather forecast, and so forth. Also, the beacon receiver and FM receiver are arranged so as to be unitized and disposed as a VICS receiver, but can be disposed separately.

The traffic information includes an information classification indicating the classification of information, a mesh number for identifying mesh, a link number for pinpointing a road link connecting between two points (e.g., intersections), and also indicating the classification of up/down road, and link information indicating the content of the information to be provided corresponding to the link number. For example, in the event that the traffic information is heavy traffic information, the link information comprises heavy traffic head data indicating the distance from the start point of the road link to the head of heavy traffic, the degree of heavy traffic, heavy traffic length indicating the distance from the head of the road link to the end of heavy traffic, link duration indicating duration necessary for traveling on the road link, and so forth.

The communication unit 38 can receive various types of information such as the traffic information, common information, and so forth from the information center 51 via the network 63 as well as data such as the map data, statistics data, driving history data, and so forth.

Accordingly, the information center 51 comprises a server 53, a communication unit 57 connected to the server 53, a database (DB) 58 serving as an information recording unit, and so forth. The server 53 comprises a CPU 54 serving as a control device, and also serving as a computing device, RAM 55, ROM 56, and so forth. Also, the same data as the various data recorded in the data recording unit 16, e.g., the map data, statistics data, driving history data, and so forth are recorded in the database 58. Further, the information center 51 can provide various types of information such as the current traffic information, common information, and so forth transmitted from the road traffic information center, and driving history data collected from multiple vehicles (the guided vehicle and other vehicles) in real time.

The front monitoring device 48 comprises a laser radar, a radar such as a millimeter-wave radar or the like, an ultrasonic sensor, or the like, or a combination of those, monitors a preceding vehicle which is a vehicle traveling ahead, and monitors temporary stop points and obstacles. Also, the front monitoring device 48 detects relative speed indicating relative vehicle speed as to the preceding vehicle as the circumferential information of a vehicle, approach speed as to a temporary stop point, approach speed for obstacles, and so forth, and calculates the distance between vehicles, inter vehicle time, and so forth.

The back camera 49 is made up of a CCD device, which is attached in a state in which the optical axis is directed diagonally downward, shoots vehicles behind which are other vehicles traveling behind the vehicle, buildings and structures of the road side, and so forth as photographed objects as well as the above object features, and generates the image data of the photographed objects which were photographed to transmit this to the CPU 31. The CPU 31 reads in the image data, and recognizes the respective photographed objects within the image as objects to be recognized by subjecting the image data to image processing. With the present embodiment, a CCD device is used as the back camera 49, but a CMOS device or the like can be used.

Note that the navigation system, navigation processing unit 17, CPU 31, CPU 54, server 53, and so forth serve as a computer by being used independently, or in combination of two or more, and perform computing processing based on various types of programs, data, and so forth. Also, the data recording unit 16, RAM 32, RAM 55, ROM 33, ROM 56, database 58, flash memory, and so forth make up a recording medium. An MPU or the like can be also used instead of the CPU 31 and CPU 54 as a computing device.

Next, description will be made regarding the basic operation of the navigation system having the above configuration.

First, upon the operating unit 34 being operated by a driver to activate the navigation device 14, the unshown navigation initializing processing means of the CPU 31 performs navigation initializing processing, reads in the current location of the vehicle detected by the GPS sensor 15, and the vehicle direction detected by the direction sensor 18, and also initializes various types of data. Next, the unshown matching processing means of the CPU 31 performs matching, and pinpoints the current location by determining whether the current location is positioned on which road link based on the course of the current location that has been read in, the shapes and array of the respective road links making up the roads around the current location.

Also, with the present embodiment, the matching processing means pinpoint the current location based on the positions of the respective object features which are the photographed objects photographed by the back camera 49.

Accordingly, the unshown image-recognition processing means of the CPU 31 perform image recognition processing to read in image data from the back camera 49, and recognize the object features within the image made up of the image data. Also, the unshown distance calculation processing means of the CPU 31 perform distance calculation processing to calculate the distance from the back camera 49 to the actual object feature based on the position of the object feature within the image. Subsequently, the current-location pinpointing processing means of the matching processing means perform current-location pinpointing processing to read in the distance, and also read out the planimetric data from the data recording unit 16 to obtain the coordinates of the object feature, and pinpoint the current location based on the obtained coordinates and distance.

Also, the unshown lane-detection processing means of the CPU 31 perform lane detection processing to detect the driving lane where the vehicle is traveling by comparing the object feature recognized based on the image data with the object feature read out from the data recording unit 16 in the same way.

Note that the lane-detection processing means read in the sensor output of the magnetic-field sensor, and determine whether or not there is a detected object made up of ferromagnet such as a manhole or the like on a predetermined lane on a road, whereby the driving lane can also be detected based on the determination result. Further, the current location is detected by using a high-precision GPS sensor 15, whereby the current location can be detected precisely and the driving lane can be detected based on the detection result. Also, at the same time when subjecting the image data of display lines to image processing, the sensor output of the magnetic-field sensor, the current location, and so forth are combined as necessary, whereby the driving lane can be detected.

Subsequently, the unshown basic-information obtaining processing means of the CPU 31 perform basic information obtaining processing to obtain the map data by reading out the map data from the data recording unit 16, or by receiving the map data from the information center 51 or the like via the communication unit 38. Note that in the event of obtaining the map data from the information center 51 or the like, the basic-information obtaining processing means download the received map data to the flash memory.

Subsequently, the unshown display processing means of the CPU 31 perform display processing to form various types of screen on the display unit 35. For example, the map display processing means of the display processing means perform map display processing to form a map screen on the display unit 35, and display the surrounding map on the map screen, and also display the vehicle direction with the current vehicle location.

Accordingly, the driver can drive the vehicle in accordance with the map, vehicle location, and vehicle direction.

Also, upon the driver operating the operating unit 34 to input a destination, the unshown destination setting processing means of the CPU 31 perform destination setting processing to set a destination. Note that a departure location can be input and set as necessary. Also, a predetermined point can be registered beforehand, and the registered point can be set as a destination. Subsequently, upon the driver operating the operating unit 34 to input searching conditions, the unshown searching-conditions setting processing means of the CPU 31 perform searching-conditions setting processing to set searching conditions.

Thus, upon the destination and searching conditions being set, the unshown route-searching processing means of the CPU 31 perform route-searching processing to read in the current location, destination, searching conditions, and so forth, and also read out the search data and so forth from the data recording unit 16, search the route from the departure location represented with the current location to the destination using the searching conditions based on the current location, destination, and search data, and output the route data indicating a searched route. At this time, the route wherein the sum of the link costs appended for each road link is the smallest is taken as a searched route.

Also, in the event that a road on which multiple lanes are formed is included in the searched route, the route-searching processing means search the searched route for each lane regarding the above road. Accordingly, with regard to a road on which multiple lanes are formed, the lane number and so forth of the driving lane are included in the route data.

Note that route searching processing can be performed at the information center 51. In this case, the CPU 31 transmits the current location, destination, searching conditions, and so forth to the information center 51. Upon the information center 51 receiving the current location, destination, searching conditions, and so forth, the unshown route-searching processing means of the CPU 54 perform the same route-searching processing as the CPU 31 to read out the search data from the data base 58, search the route from the departure location to the destination based on the current location, destination, and search data, and output route data indicating a searched route. Subsequently, the unshown transmission processing means of the CPU 54 perform transmission processing to transmit the route data to the navigation device 14.

Subsequently, the unshown guidance processing means of the CPU 31 perform guidance processing to perform route guidance. Accordingly, the route display processing means of the guidance processing means perform route display processing to read in the route data, and display the searched route on the map screen in accordance with the route data.

In the event that a road on which multiple lanes are formed is included in the searched route, lane guidance is arranged so as to be performed. Therefore, the unshown recommended-lane calculation processing means of the CPU 31 perform recommended-lane calculation processing to read in the searched route, and also read out intersection data, lane information, and so forth, and calculate the recommended lane in each of the roads on the searched route based on the searched route, intersection data, lane information, and so forth. Subsequently, the lane display processing means of the guidance processing means perform lane display processing to form a lane guidance map on a predetermined area of a map screen, display the recommended lane on the lane guidance map, and guide the vehicle from the driving lane to the recommended lane.

Incidentally, with the route guidance, in the event that it is necessary to turn the vehicle to the left/right at a predetermined intersection, the intersection is set as a guiding point, and also as a guidance intersection. Therefore, the guidance-intersection setting processing means of the guidance processing means perform guidance-intersection setting processing to determine whether or not there is an intersection where it is necessary to turn the vehicle to the left/right in accordance with the route data, i.e., based on the searched route, and in the event that there is an intersection where it is necessary to turn the vehicle to the left/right, this intersection is set as a guidance intersection.

Subsequently, the guidance-point enlarged-view forming processing means of the guidance processing means perform guidance-point enlarged-view forming processing to form the enlarged view of the intersection, i.e., an intersection enlarged view serving as a guidance point enlarged view on a predetermined area of the map screen before the vehicle reaches a guidance intersection, and perform route guidance using the intersection enlarged view. Therefore, a guidance-point enlarged view display point is set at a point apart only a predetermined distance before the guidance intersection on the searched route, and upon the vehicle reaching the guidance-point enlarged view display point, the intersection enlarged view is displayed. Note that with a toll road only for vehicles such as a highway, an urban expressway, a toll road, and so forth, an intersection which merges/branches onto/from a junction or the like is also set as a guidance intersection.

Subsequently, in the event that multiple lanes are formed on an entrance road to a guidance intersection, or a road exiting from a guidance intersection (hereinafter, referred to as exiting road), the guidance-point enlarged-view forming processing means display the lane wherein route guidance is performed on the intersection enlarged view, and perform lane guidance. In this case, the surrounding map of the guidance intersection, searched route, landmarks such as facilities which become marks in the guidance intersection are displayed on the intersection enlarged view.

Subsequently, the route-guidance-point setting processing means of the guidance processing means perform route-guidance-point setting processing to set one or more, multiple route guidance points with the present embodiment at points apart only predetermined distance before the guidance intersection on the searched route, and the voice output processing means of the guidance processing means perform voice output processing, upon the vehicle reaching each of the route guidance points, the route guidance including the content determined beforehand for each route guidance point regarding the guidance intersection is output from the voice output unit 37. Note that the guidance point enlarged view display point wherein the intersection enlarged view is displayed, and one of the respective route guidance points, e.g., the first route guidance point can be set as the same point.

Subsequently, in the event that multiple lanes are formed on an entrance road to the guidance intersection, or a road exiting from the guidance intersection, lane guidance regarding the guidance intersection is performed, a predetermined lane is recommended as the recommended lane, and the vehicle is arranged so as to be guided from the driving lane to the recommended lane, but even with a guidance intersection wherein a vehicle can readily pass through where it is unnecessary to perform lane guidance, if route guidance is output, route guidance becomes complicated.

Accordingly, with the present embodiment, an arrangement is made wherein regarding a guidance intersection wherein a driver can readily select an appropriate lane, i.e., can readily perform lane planning at an entrance road or exiting road even without performing lane guidance, in the event that predetermined route guidance simplification conditions are satisfied, even though the vehicle reaches a route guidance point, lane guidance by voice is not performed. Therefore, the guidance-point determining processing means of the guidance processing means perform guidance point determining processing to perform determination of a guidance intersection by classifying various types of guidance intersections. In other words, the guidance-point determining processing means regard a guidance intersection wherein lane planning cannot be readily performed as a first class of guidance intersection, and regard a guidance intersection wherein lane planning can be readily performed as a second class of guidance intersection.

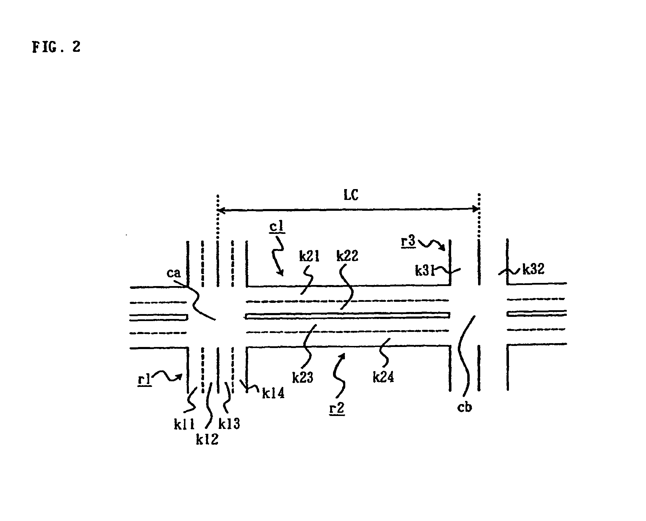

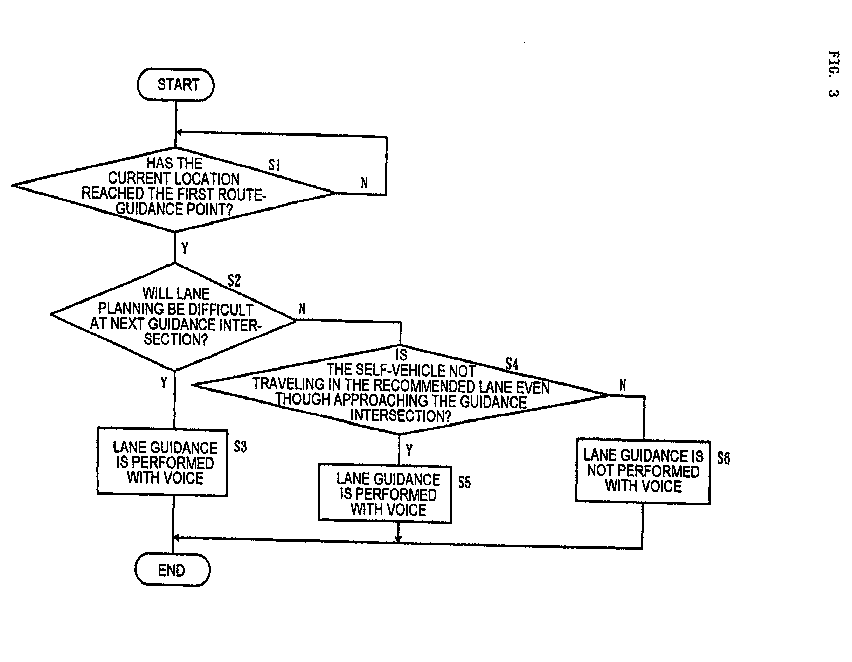

Fig. 2 is an explanatory diagram for classifying guidance intersections according to an embodiment of the present invention, and Fig. 3 is a flowchart illustrating operation of guidance processing means according to an embodiment of the present invention.

In the drawings, r1 through r3 denote roads, c1 is a guidance intersection where the roads r1 and r2 intersect, and also the roads r2 and r3 intersect, and the guidance intersection c1 comprises continuous intersections ca and cb, whereby the roads r1 and r2 intersect at the intersection ca, and the roads r2 and r3 intersect at the intersection cb.

Also, k11 through k14 are the lanes of the road r1, k21 through k24 are the lanes of the road r2, and k31 and k32 are the lanes of the road r3.

First, in the event that the vehicle is traveling on the road r1 where the lanes k11 and k12 are formed, and turns to the right at the intersection ca, the guidance-point determining processing means determine whether or not a first condition holds depending on whether or not a predetermined lane, the rightmost lane k12 with the present embodiment is set to the recommended lane, and in the event that the rightmost lane k12 is not set to the recommended lane, determination is made that the first condition holds, and in the event that the rightmost lane k12 is set to the recommended lane, determination is made that the first condition does not hold. Also, in the event that the vehicle is traveling on the road r1, and turns to the left at the intersection ca, the guidance-point determining processing means determine whether or not a second condition holds depending on whether or not the leftmost lane k11 is set to the recommended lane, and in the event that the leftmost lane k11 is not set to the recommended lane, determination is made that the second condition holds, and in the event that the leftmost lane k11 is set to the recommended lane, determination is made that the second condition does not hold.

Further, the guidance-point determining processing means determine whether or not a third condition holds depending on whether or not the vicinity of the intersection c1, e.g., the recommended lane changes within a range of a predetermined distance from the guidance intersection c1, and in the event that the recommended lane changes, determination is made that the third condition holds, and in the event that the recommended lane does not change, determination is made that the third condition does not hold.

Subsequently, the guidance-point determining processing means determine whether or not a fourth condition holds depending on whether or not with between the intersections ca and cb, the distance where the vehicle can move between lanes, i.e., a movable distance between lanes Lx is shorter than the minimum distance necessary for moving between lanes from the driving lane to the recommended lane, i.e., the minimum required distance Lmin, and in the event that the movable distance between lanes Lx is shorter than the minimum required distance Lmin, determination is made that the fourth condition holds, and in the event that the movable distance between lanes Lx is equal to or longer than the minimum required distance Lmin, determination is made that the fourth condition does not hold.

Note that in the event that a zone where movement between lanes is prohibited, i.e., a lane change prohibition zone does not exist between the respective intersections ca and cb, the movable distance between lanes Lx is arranged so as to become equal to the distance between the respective intersections ca and cb, and with the present embodiment, the distance Lc between centers of the respective intersections ca and cb, but in the event that the lane change prohibition zone exists between the respective intersections ca and cb, the movable distance between lanes Lx becomes equal to the distance obtained by subtracting the distance L2 of the movable distance between lanes from the distance Lc.

For example, when the vehicle is traveling on the road r1 to enter the guidance intersection c1, turns to the right at the intersection ca to exit to the road r2, and subsequently, enters the intersection cb, turns to the left at the intersection cb to exit to the road r3, in the event that there is no lane change prohibition zone between the respective intersections ca and cb, the vehicle can turn to the right at the intersection ca to exit to the lane k22, following which can move to the lane k21 at an arbitrary location, and enter the intersection cb. In this case, the movable distance between lanes Lx is arranged so as to become equal to the distance Lc between the respective intersections ca and cb.

Alternately, in the event that there is a lane change prohibition zone between the respective intersections ca and cb, the vehicle turns to the right to exit to the lane k22, following which moves to the lane k21 at a location other than the lane change prohibition zone, and enter the intersection cb. In this case, the movable distance between lanes Lx is arranged so as to become equal to the distance obtained by subtracting the distance L2 of the movable distance between lanes from the distance Lc between the respective intersections ca and cb. Note that in the event that the vehicle cannot turn to the left at the intersection cb, the guidance-point determining processing means does not perform determination whether or not the fourth condition holds.

Incidentally, when assuming that vehicle speed at the time of route guidance being performed, and moving between lanes is

$$va = 30 \ km/h,$$

and time necessary for outputting route guidance by voice is

$$\tau 1 = 2 \ sec,$$

distance L1 over which a vehicle travels during route guidance being performed is

$$L1 \approx 17 \ m,$$

when assuming that the shortest time per one lane necessary at the time of moving between lanes is

$$Tq = 15 \ sec,$$

and the number of movement of lanes from the driving lane to the recommended lane is N, following route guidance being performed, distance L2 over which the vehicle travels during movement between lanes is

$$L2 \approx 125 \times N \ m.$$

Accordingly, the minimum required distance Lmin is set as follows:

$$Lmin = 17 + 125 \times N \ m.$$

Thus, upon determining whether or not the first through fourth conditions hold, the guidance-point determining processing means determine whether or not at least one condition of the first through fourth conditions holds. Subsequently, in the event that at least one condition of the first through fourth conditions holds, the guidance-point determining processing means regard the guidance intersection as the first class of guidance intersection, and in the event that none of the first through fourth conditions holds, the guidance-point determining processing means regard the guidance intersection as the second class of guidance intersection.

Subsequently, the route-guidance determining processing means of the guidance processing means perform route-guidance determining processing to read in whether the guidance intersection c1 belongs to either of the first class or second class of guidance intersection at the time of performing lane guidance regarding the guidance intersection c1 by voice, and determine whether or not route guidance simplification conditions hold. In the event that the guidance intersection c1 belongs to the first class of guidance intersection, determination is made that the route guidance simplification conditions do not hold, and the ordinary processing means of the voice output processing means perform ordinary processing to perform lane guidance at each of the route guidance points by ordinary voice. Also, in the event that the guidance intersection c1 belongs to the second class of guidance intersection, determination is made that the route guidance simplification conditions hold, and the simplification processing means of the voice output processing means perform simplification processing to perform lane guidance by voice in a simplified manner. That is to say, of the respective route guidance points, at the first route guidance point, lane guidance by voice is not performed. Also, when the vehicle reaches the second route guidance point, e.g., the intermediate route guidance point, or an immediately preceding route guidance point, the simplification processing means read in the driving lane and the recommended lane, and determine whether or not the vehicle is traveling in the recommended lane, and in the event that the vehicle is traveling in the recommended lane, the simplification processing means skips lane guidance by voice, and in the event that the vehicle is not traveling in the recommended lane, the simplification processing means perform lane guidance by voice. That is to say, even though the vehicle approaches the guidance intersection c1, only in the event that the vehicle has not entered the recommended lane, the simplification processing means perform lane guidance by voice.

Thus, determination is made whether or not the route guidance simplification conditions hold, and in the event that the route guidance simplification conditions hold, lane guidance by voice is simplified, whereby route guidance can be simplified.

Next, description will be made regarding the flowchart.

Step S1: Standby for the vehicle to reach the first route guidance point, and in the event of reaching the first route, the flow proceeds to Step S2.

Step S2: Determine whether or not lane planning can be readily performed at the next guidance intersection. In the event that lane planning cannot be readily performed, the flow proceeds to Step S3, and in the event that lane planning can be readily performed, the flow proceeds to Step S4.

Step S3: Perform lane guidance by voice, and end the processing.

Step S4: Determine whether or not the vehicle is not traveling in the recommended lane even though approaching the guidance intersection. In the event that the vehicle is not traveling in the recommended lane even though approaching the guidance intersection, the flow proceeds to Step S5, and in the event of traveling in the recommended lane, the flow proceeds to Step S6.

Step S5: Perform lane guidance by voice, and end the processing.

Step S6: Perform no lane guidance by voice, and end the processing.

Next, description will be made regarding the case of performing lane guidance by voice at a typical guidance intersection using ordinary processing.

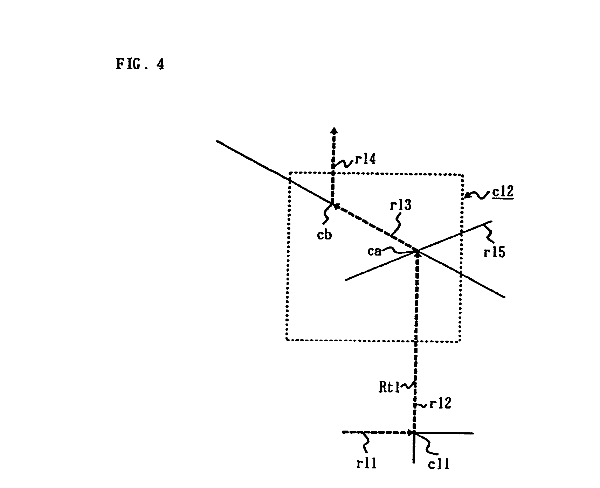

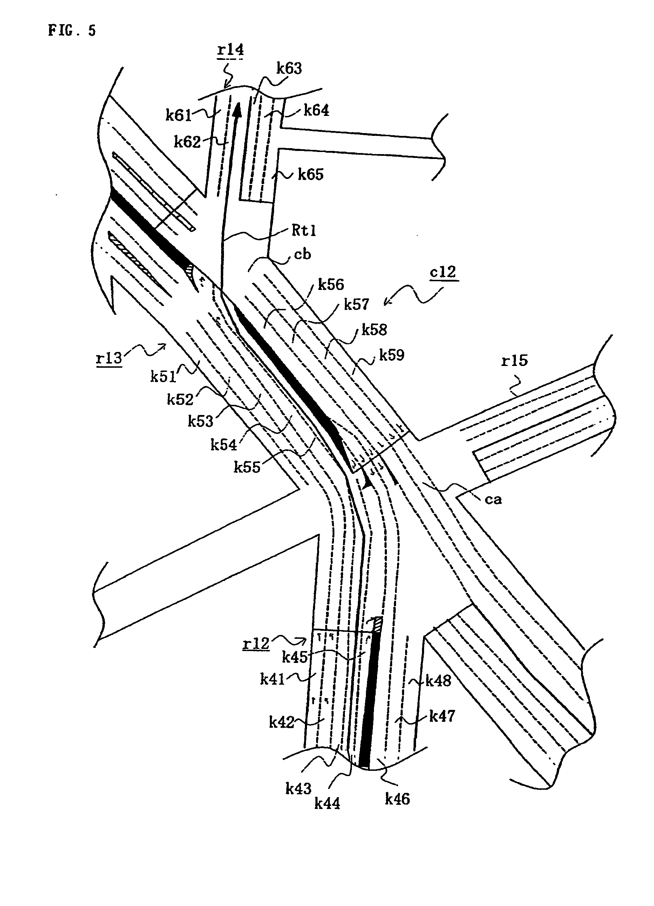

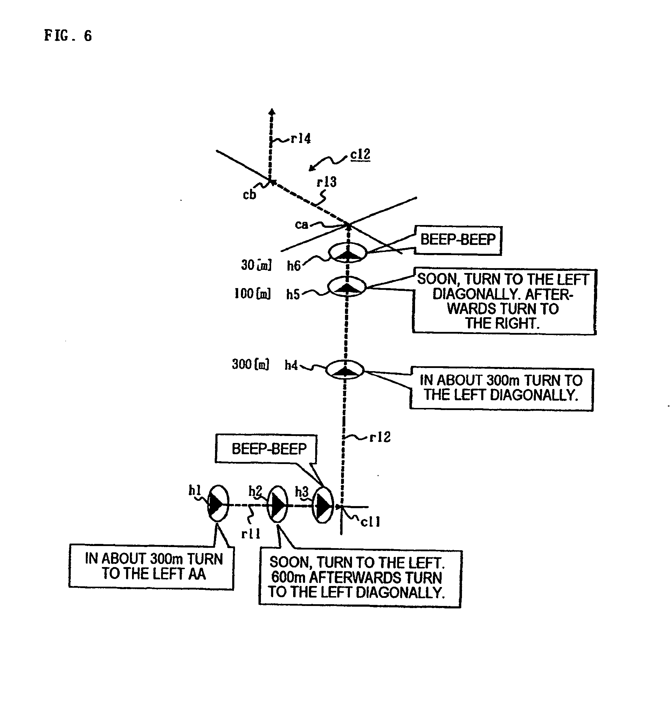

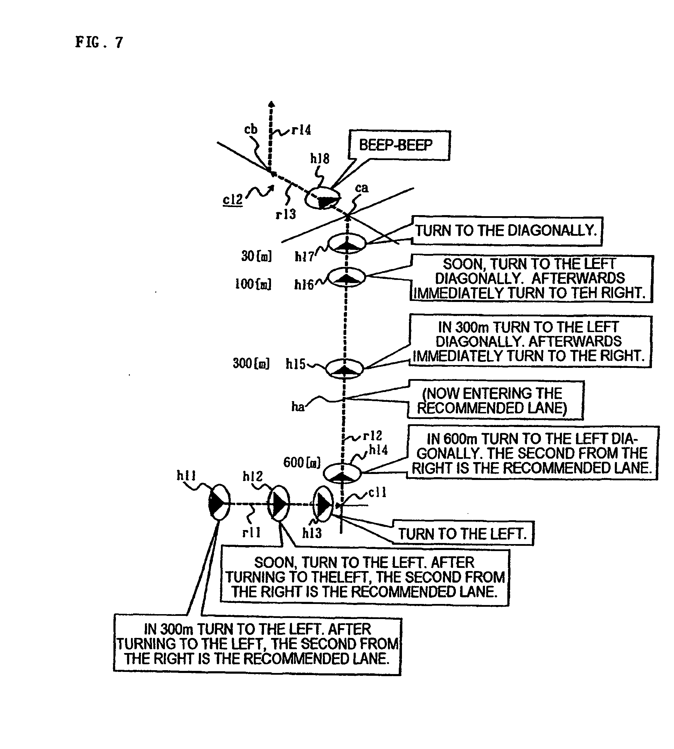

Fig. 4 is a conceptual diagram illustrating a first example of a guidance intersection according to an embodiment of the present invention, Fig. 5 is a detailed diagram illustrating the first example of the guidance intersection according to an embodiment of the present invention, Fig. 6 is a reference diagram of lane guidance regarding the first example of the guidance intersection, and Fig. 7 is a diagram illustrating lane guidance regarding the first example of the guidance intersection according to an embodiment of the present invention.

In the drawings, r11 through r15 denote roads, c11 denotes the guidance intersection where the roads r11 and r12 intersect, c12 denotes the guidance intersection where the roads r12, r13, and r15 intersect, and also the roads r13 and r14 intersect, the guidance intersection c12 comprises continuous intersections ca and cb, the roads r12, r13, and r15 intersect at the intersection ca, and the roads r13 and r14 intersect at the intersection cb. Rt1 is a searched route. The searched route Rt1 is arranged so as to pass through the roads r11 through r14 in order, and turn to the left at the guidance intersection c11, merge onto the road r13 at the guidance intersection c12, following which turn to the right.

Lanes k41 through k48 are formed on the road r12, lanes k51 through k59 on the road r13, and lanes k61 through k65 on the road r14. The lanes k45, k54, and k55 are right-turn dedicated lanes. In the event of driving a vehicle along the searched route Rt1, the vehicle turns to the left at the guidance intersection c11 to enter the road r12, then merges onto the road r1 at the intersection ca of the guidance intersection c12, and then turns to the right at the intersection cb.

At this time, the recommended-lane calculation processing means of the guidance processing means need to turn to the right at the intersection cb, so the lane k55 is set to the recommended lane before the intersection cb, and in order to turn to the left at the intersection ca to exit to the lane k55, the lane k44 is set to the recommended lane before the intersection ca. In this case, when turning to the left at the intersection ca, the leftmost lane k41 is not set to the recommended lane, so that the first condition holds, determination is made that the guidance intersection 12 belongs to the first class of guidance intersection, and the route-guidance determining processing means determine that the route guidance simplification conditions do not hold. Consequently, the ordinary processing means perform lane guidance by voice at the respective route guidance points.

Note that when traveling along the searched route Rt1, in the event that lane guidance is not performed, as illustrated in Fig. 6, route guidance points h1 through h3 are set before the guidance intersection c11, and route guidance points h4 through h6 are set at the points of 300 m, 100 m, and 30 m before the guidance intersection c12.

Subsequently, during traveling on the road r11, the message of "In about 300 m turn to the left at AA." or the like is output by voice at the route guidance point h1, the message of "Soon, turn to the left. 600 m after that turn to the left diagonally." or the like at the route guidance point h2, and an advice sound (beep-beep) indicates just before the guidance intersection c11 at the route guidance point h3.

Also, during traveling on the road r12, the message of "In about 300 m turn to the left diagonally." or the like is output by voice at the route guidance point h4, the message of "Soon, turn to the left diagonally. Turn to the right after that." or the like at the route guidance point h5, and an advice sound (beep-beep) indicates just before the intersection ca at the route guidance point h6.

Alternately, in the event of performing lane guidance, as illustrated in Fig. 7, route guidance points h11 through h13 are set before the guidance intersection c11, route guidance points h14 through h17 are set at the points of 600 m, 300 m, 100 m, and 30 m before the guidance intersection c12, a route guidance point h18 is set between the intersections ca and cb. Note that a route guidance point ha can be set between the route guidance points h14 and h15.

Subsequently, during traveling on the road r11, the message of "In 300 m turn to the left. Following turning to the left, the second from the right is the recommended lane" or the like is output by voice at the route guidance point h11, the message of "Soon, turn to the left. Following turning to the left, the second from the right is the recommended lane" or the like at the route guidance point h12, and the message of "Turn to the left" or the like at the route guidance point h13.

Also, during traveling on the road r12, the message of "In 600 m turn to the left diagonally. Following turning to the left, the second from the right is the recommended lane" or the like is output by voice at the route guidance point h14, the message of "In 300 m turn to the left diagonally. Afterwards immediately turn to the right" or the like at the route guidance point h15, the message of "Soon, turn to the left diagonally. Afterwards immediately turn to the right" or the like at the route guidance point h16, and the message of "Turn to the left diagonally" or the like at the route guidance point h17.

Note that the route guidance point ha is set at an arbitrary point from the intersection c11 to the intersection ca between the route guidance points h14 and h15, and the message of "Now entering the recommended lane" or the like is output by voice at the route guidance point ha.

Further, during traveling on the road r13, an advice sound (beep-beep) indicating just before the intersection cb is output by voice at the route guidance point h18.

Next, description will be made regarding the case of performing lane guidance by voice at another typical guidance intersection using ordinary processing.

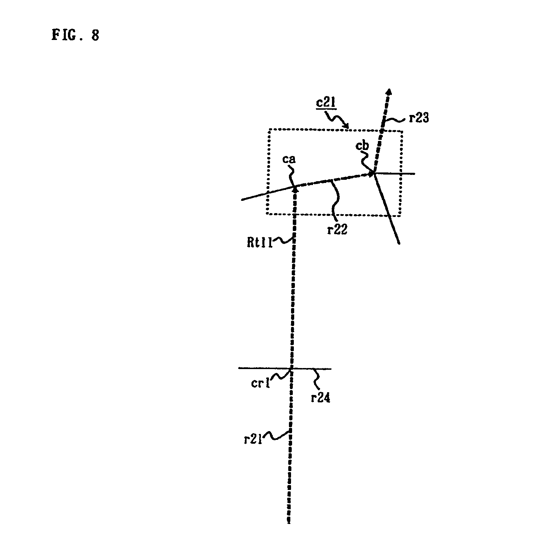

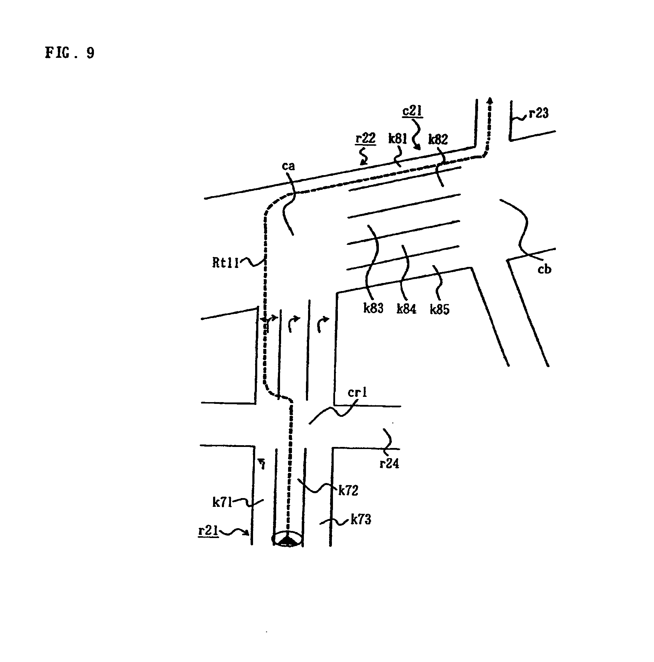

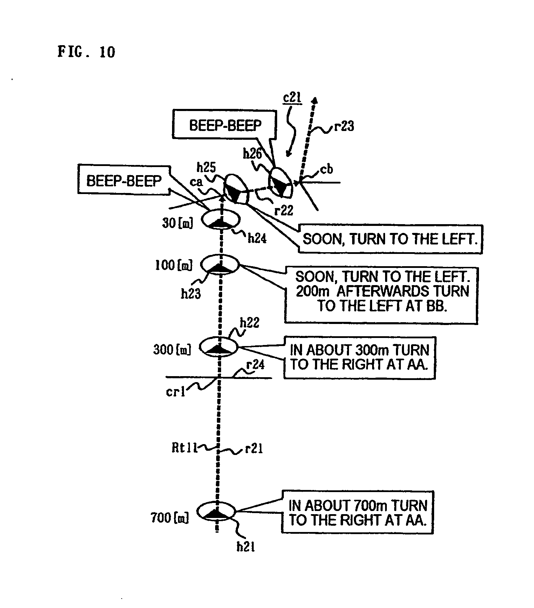

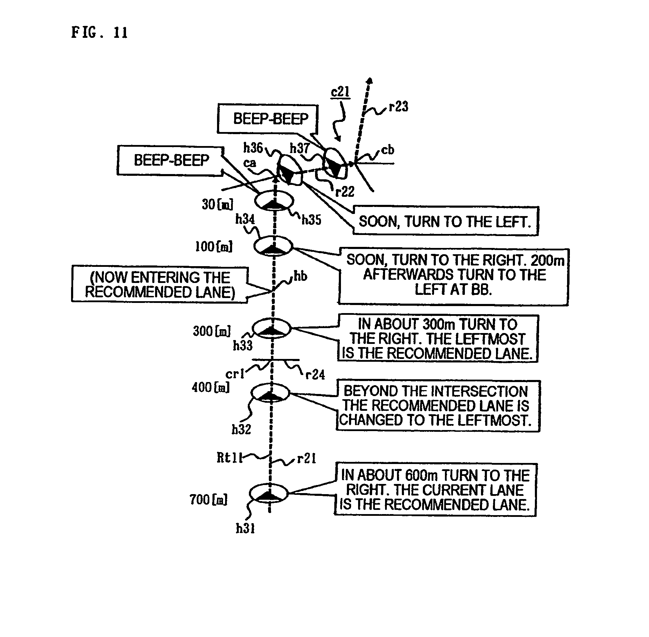

Fig. 8 is a conceptual diagram illustrating a second example of a guidance intersection according to an embodiment of the present invention, Fig. 9 is a detailed diagram illustrating the second example of the guidance intersection according to an embodiment of the present invention, Fig. 10 is a reference diagram of lane guidance regarding the second example of the guidance intersection, and Fig. 11 is a diagram illustrating lane guidance regarding the second example of the guidance intersection according to an embodiment of the present invention.

In the drawings, r21 through r24 denote roads, cr1 denotes the intersection where the roads r21 and r24 intersect, c21 denotes the guidance intersection where the roads r21 and r22 intersect, and also the roads r22 and r23 intersect, the guidance intersection c21 comprises an intersection ca where the roads r21 and r22 intersect, and a intersection cb where the roads r22 and r23 intersect. Rt11 is a searched route. The searched route Rt11 is arranged so as to pass through the roads r21 through r23 in order, and with the guidance intersection c21, turn to the right at the intersection ca, and then immediately turn to the left at the intersection cb.

Lanes k71 through k73 are formed on the road r21, and lanes k81 through k85 on the road r22. Before the intersection cr1, the lane k71 is a left-turn dedicated lane, and before the intersection ca of the guidance intersection c21, the lane k71 is a lane which can turn to the right/left, and the lanes k72 and k73 are right-turn dedicated lanes. In the event of driving a vehicle along the searched route Rt11, the vehicle passes through the intersection cr1, then with the guidance intersection c21, turns to the right at the intersection ca to enter the road r22, and subsequently turns to the left at the intersection cb. At this time, with the road r21, the lane k71 before the intersection cr1 is the left-turn dedicated lane, so the lane k72 is set to the recommended lane. Also, before the intersection ca of the guidance intersection c21, the lane k71 can turn to the right/left, and the lanes k72 and k73 are right-turn dedicated lanes, but the vehicle turns to the left at the intersection cb, so the lane k81 is set to the recommended lane on the road r22, the lane k71 before the intersection ca is set to the recommended lane on the road r21, and also the lane k72 before the intersection cr1 is set to the recommended lane.

In this case, in the event that the vehicle is traveling on the road r21 on which the lanes k71 through k73 are formed, turns to the right at the intersection ca of the guidance intersection c21, and then turns to the left at the intersection cb, the rightmost lane k73 on the road r21 is a right-turn dedicated lane at the intersection ca, but is not set to the recommended lane. Accordingly, the guidance-point determining processing means determine that the first condition holds, and the guidance intersection c21 belongs to the first class of guidance intersection, and the route-guidance determining processing means determine that the route-guidance simplification conditions do not hold. Moreover, the recommended lane changes from the lane k72 to the lane k71 before the vicinity of the guidance intersection c21. Accordingly, the guidance-point determining processing means determine that the third condition holds, and the guidance intersection c21 belongs to the first class of guidance intersection, and the route-guidance determining processing means determine that the route-guidance simplification conditions do not hold. Consequently, the ordinary processing means perform lane guidance by voice at each of the route guidance points.

Note that when traveling along the searched route Rt11, in the event of performing no lane guidance, as illustrated in Fig. 10, route guidance points h21 through h24 are set at the points of 700 m, 300 m, 100 m, and 30 m before the guidance intersection c21, and route guidance points h25 and h26 are set between the intersections ca and cb on the road r22.

Subsequently, during traveling on the road r21, the message of "In about 700 m turn to the right at AA" or the like is output by voice at the route guidance point h21, the message of "In about 300 m beyond turn to the right at AA" or the like at the route guidance point h22, the message of "Soon, turn to the right. 200 m after that turn to the left at BB" or the like at the route guidance point h23, and an advice sound (beep-beep) indicates just before the intersection ca at the route guidance point h24.

Also, during traveling on the road r22, the message of "Soon, turn to the left" or the like is output by voice at the route guidance point h25, and an advice sound (beep-beep) indicates just before the intersection cb at the route guidance point h26.

Alternately, in the event of performing lane guidance, as illustrated in Fig. 11, route guidance points h31 through h35 are set at the points of 600 m, 400 m, 300 m, 100 m, and 30 m before the guidance intersection c21, and route guidance points h36 and h37 are set between the intersections ca and cb on the road r22. Note that a route guidance point hb can be set between the route guidance points h33 and h34.

Subsequently, during traveling on the road r21, the message of "In about 700 m turn to the right. The current lane is the recommended lane" or the like is output by voice at the route guidance point h31, the message of "Beyond the intersection the recommended lane is changed to the leftmost" or the like at the route guidance point h32, the message of "In about 300 m beyond turn to the right.

The leftmost is the recommended lane" or the like at the route guidance point h33, the message of "Soon, turn to the right. 200 m after that turn to the left at BB" or the like at the route guidance point h34, and an advice sound (beep-beep) indicates just before the intersection ca at the route guidance point h35.

Also, during traveling on the road r22, the message of "Soon, turn to the left" or the like is output by voice at the route guidance point h36, and an advice sound (beep-beep) indicates just before the intersection cb at the route guidance point h37.

Note that in the event that the route guidance point hb is set at an arbitrary point from the intersection cr1 to the intersection ca, e.g., between the route guidance points h33 and h34, the message of "Now entering the recommended lane" or the like can be output by voice at the route guidance point hb.

Next, description will be made regarding the case of performing lane guidance by voice at yet another typical guidance intersection using simplification processing.

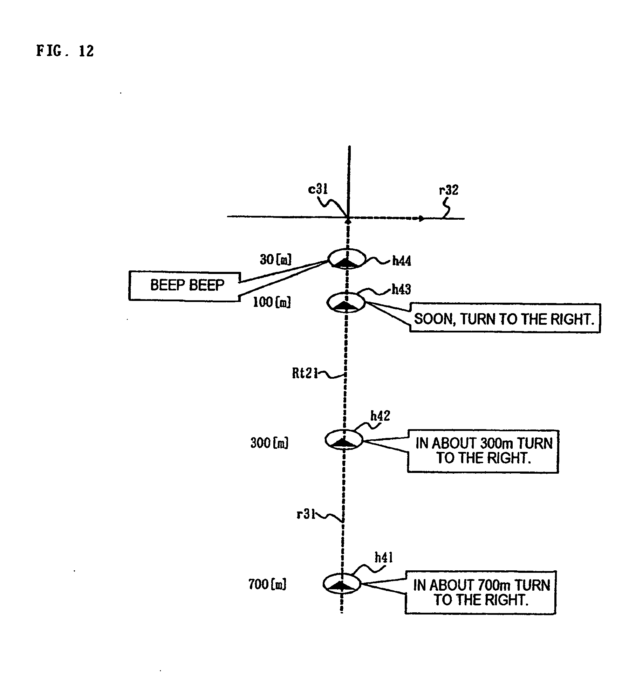

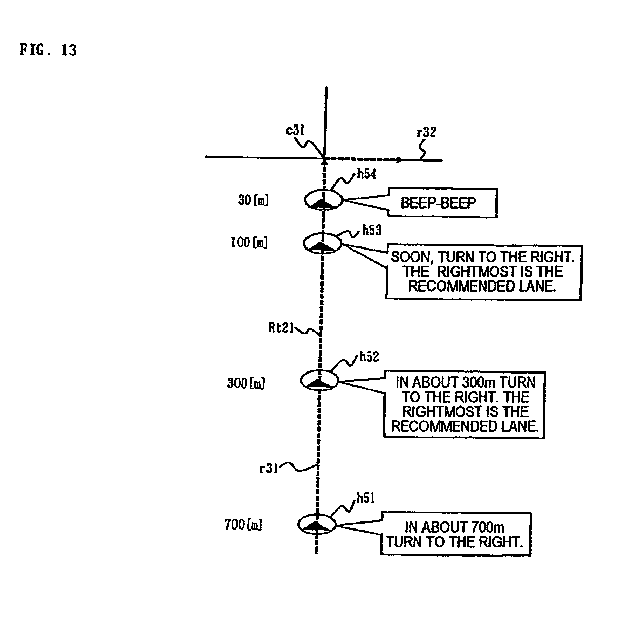

Fig. 12 is a first diagram illustrating route guidance using simplification processing regarding a third example of a guidance intersection according to an embodiment of the present invention, and Fig. 13 is a second diagram illustrating route guidance using simplification processing regarding the third example of a guidance intersection according to an embodiment of the present invention.

In the drawings, r31 and r32 denote roads, c31 denotes the intersection where the roads r31 and r32 intersect. Rt21 is a searched route. The searched route Rt21 is arranged so as to pass through the roads r31 and r32 in order, and turn to the right at the guidance intersection c31. When traveling along the searched route Rt21, route guidance points h41 through h44 are set at the points of 700 m, 300 m, 100 m, and 30 m before the guidance intersection c31. Let us say that intersections are not continuously provided at the guidance intersection c31, and moreover, the first through fourth conditions do not hold.

In this case, the guidance-point determining processing means determine that the first through fourth conditions do not hold, and the guidance intersection c31 belongs to the second class of guidance intersection, and the route-guidance determining processing means determine that the route-guidance simplification conditions hold. Consequently, the simplification processing means do not perform lane guidance by voice at the first route guidance point h41, and perform lane guidance by voice only in the case of the vehicle not entering the rightmost lane which is the recommended lane even though approaching the guidance intersection c31.

That is to say, in the event of the vehicle entering the rightmost lane before approaching the guidance intersection c31, as illustrated in Fig. 12, during traveling on the road r31, the message of "In about 700 m turn to the right" or the like is output by voice at the route guidance point h41, the message of "In about 3m turn to the right" or the like at the route guidance point h42, the message of "Soon, turn to the right" or the like at the route guidance point h43, and an advice sound (beep-beep) indicates just before the intersection c31 at the route guidance point h44.

Also, in the event of the vehicle not entering the rightmost lane before approaching the guidance intersection c31, as illustrated in Fig. 13, during traveling on the road r31, the message of "In about 700 m turn to the right" or the like is output by voice at the route guidance point h51, the message of "In about 300 m turn to the right. The rightmost is the recommended lane" or the like at the route guidance point h52, the message of "Soon, turn to the right. The rightmost is the recommended lane" or the like at the route guidance point h53, and an advice sound (beep-beep) indicates just before the intersection c31 at the route guidance point h54.

Note that the present invention is not restricted to the above embodiments, various modifications can be made based on the scope of the present invention as defined in the appended claims.

A route guidance system comprises: a current-location detecting unit; a route-searching processing unit for searching a searched route; a guidance-intersection setting processing unit for setting a guidance intersection based on the searched route; a route-guidance-point setting processing unit for setting a route guidance point at predetermined points before the guidance intersection; and a guidance processing unit for performing route guidance regarding the guidance intersection when a self-vehicle reaches the route guidance point. The guidance processing unit includes a guidance-intersection determining processing unit for determining whether or not the guidance intersection is a guidance intersection where lane planning can be readily performed, and a simplification processing unit for preventing lane guidance at a predetermined route guidance point in the event that lane planning can be readily performed. Lane guidance is arranged so as not to be performed in the event that lane planning can be readily performed.

## Claims

1. A route guidance system comprising:

   a current-location detecting unit (15, 18, 44) adapted to detect the current location of a vehicle;
   route-searching processing means (31) adapted to search a searched route up to a destination based on said current location;
   guidance-intersection setting processing means (31) adapted to set a guidance intersection based on said searched route;
   route-guidance-point setting processing means (31) adapted to set a route guidance point at a predetermined point before said guidance intersection;
   recommended-lane calculation processing means adapted to calculate the recommended lane at each of the roads on said searched route based on said searched route;
   guidance processing means (31) adapted to perform route guidance regarding said guidance intersection when the vehicle reaches said route guidance point, wherein said guidance processing means include guidance-intersection determining processing means (31) adapted to determine, regardless of on which lane the vehicle is travelling:

   that the lane planning cannot readily be performed by a user at the guidance intersection, when the vehicle makes a right turn at the guidance intersection, if there are a plurality of lanes from which the right turn is available and the recommended lane is not a rightmost lane but a lane other than the rightmost lane among the plurality of lanes from which the right turn is available, or when the vehicle makes a left turn at the guidance intersection, if there are a plurality of lanes from which the left turn is available and the recommended lane is not a leftmost lane but a lane other than the leftmost lane among the plurality of lanes from which the left turn is available, and
   that the lane planning can readily be performed by a user at the guidance intersection, when the vehicle makes a right turn at the guidance intersection, if there are a plurality of lanes from which the right turn is available and the recommended lane is a rightmost lane among the plurality of lanes from which the right turn is available, or when the vehicle makes a left turn at the guidance intersection, if there are a plurality of lanes from which the left turn is available and the recommended lane is a leftmost lane among the plurality of lanes from which the left turn is available; and
   simplification processing means (31), which is adapted to control the guidance processing means (31) so as to perform lane guidance at the route guidance point if it is determined that the lane planning cannot readily be performed by the user at the guidance intersection, and to not perform the lane guidance at the route guidance point if it is determined that lane planning can be readily performed by the user at the guidance intersection.

2. The route guidance system according to Claim 1, wherein said guidance-intersection determining processing means is adapted to determine whether or not said guidance intersection is a guidance intersection where lane planning can be readily performed depending on whether or not the recommended lane is changed between the intersections where said guidance intersections continue.

3. The route guidance system according to Claim 1, wherein said guidance-intersection determining processing means is adapted to determine whether or not said guidance intersection is a guidance intersection where lane planning can be readily performed based on the distance necessary for moving between lanes at between the intersections where said guidance intersections continue.

4. The route guidance system according to Claim 1, further comprising:

   lane detecting processing means adapted to detect a driving lane at said current location, wherein said simplification processing means is adapted to perform lane guidance only in the event that the vehicle does not enter said recommended lane even though approaching said guidance intersection.

5. A route guidance method using a current-location detecting unit (15, 18, 44) for detecting the current location of a adapted to vehicle, and guidance processing means (31) for searching a searched route up to a destination based on the current location of the vehicle to perform route guidance, comprising:

   a step for searching a searched route up to a destination based on the current location of adapted to the vehicle detected by said current-location detecting unit;
   a step for setting a guidance intersection based on the searched route;
   a step for setting route guidance points at predetermined points before the guidance intersection;

a step for performing route guidance regarding said guidance intersection when the vehicle reaches a route guidance point; and

a step for calculating a recommended lane at each of roads on said searched route based on said searched route, and

a step of determining, regardless of on which lane the vehicle is travelling:

> that the lane planning cannot readily be performed by a user at the guidance intersection, when the vehicle makes a right turn at the guidance intersection, if there are a plurality of lanes from which the right turn is available and the recommended lane is not a rightmost lane but a lane other than the rightmost lane among the plurality of lanes from which the right turn is available, or when the vehicle makes a left turn at the guidance intersection, if there are a plurality of lanes from which the left turn is available and the recommended lane is not a leftmost lane but a lane other than the leftmost lane among the plurality of lanes from which the left turn is available, and
>
> that the lane planning can readily be performed by a user at the guidance intersection, when the vehicle makes a right turn at the guidance intersection, if there are a plurality of lanes from which the right turn is available and the recommended lane is a rightmost lane among the plurality of lanes from which the right turn is available, or when the vehicle makes a left turn at the guidance intersection, if there are a plurality of lanes from which the left turn is available and the recommended lane is a leftmost lane among the plurality of lanes from which the left turn is available;

wherein the lane guidance at the route guidance point is performed if it is determined that the lane planning cannot readily be performed by the user at the guidance intersection; and

wherein the lane guidance at the route guidance point is not performed if it is determined that lane planning can be readily performed by the user at the guidance intersection.

**Patentansprüche**

1. Navigationssystem mit
einer aktuellen Ort-Erfassungseinheit (15, 18, 44), eingerichtet zur Erfassung des aktuellen Orts eines Fahrzeugs,

einer Routensuchverarbeitungseinrichtung (31), eingerichtet zum Suchen einer gesuchten Route bis zu einem Ziel beruhend auf dem aktuellen Ort,

einer Führungskreuzung-Einstellungsverarbeitungseinrichtung (31), eingerichtet zur Einstellung einer Führungskreuzung beruhend auf der gesuchten Route,

einer Navigationspunkt-Einstellungsverarbeitungseinrichtung (31), eingerichtet zur Einstellung eines Navigationspunkts an einem vorbestimmten Punkt vor der Führungskreuzung,

einer empfohlenen Spur-Berechnungsverarbeitungseinrichtung, eingerichtet zur Berechnung der empfohlenen Spur auf jeder Straße auf der gesuchten Route beruhend auf der gesuchten Route,

einer Führungsverarbeitungseinrichtung (31), eingerichtet zur Durchführung einer Navigation hinsichtlich der Führungskreuzung, wenn das Fahrzeug den Navigationspunkt erreicht, wobei die Führungsverarbeitungseinrichtung eine Führungskreuzung-Bestimmungsverarbeitungseinrichtung (31) enthält, die zur Bestimmung ungeachtet davon eingerichtet ist, auf welcher Spur das Fahrzeug gerade fährt:

> dass die Spurplanung durch einen Benutzer an der Führungskreuzung nicht einfach durchgeführt werden kann, wenn das Fahrzeug an der Führungskreuzung ein Rechtsabbiegen durchführt, falls es eine Vielzahl von Spuren gibt, von denen das Rechtabbiegen verfügbar ist, und die empfohlene Spur nicht die Spur ganz rechts sondern eine andere Spur als die Spur ganz rechts unter der Vielzahl der Spuren ist, von denen das Rechtsabbiegen verfügbar ist, oder wenn das Fahrzeug ein Linksabbiegen an der Führungskreuzung durchführt, falls es eine Vielzahl von Spuren gibt, von denen das Linksabbiegen verfügbar ist, und die empfohlene Spur nicht die Spur ganz links sondern eine andere Spur als die Spur ganz links unter der Vielzahl der Spuren ist, von denen das Linksabbiegen verfügbar ist, und
>
> dass die Spurplanung durch einen Benutzer an der Führungskreuzung einfach durchgeführt werden kann, wenn das Fahrzeug ein Rechtsabbiegen an der Führungskreuzung durchführt, falls es eine Vielzahl von Spuren gibt, von denen das Rechtsabbiegen verfügbar ist, und die empfohlene Spur die Spur ganz rechts unter der Vielzahl der Spuren ist, von denen das Rechtsabbiegen verfügbar ist, oder wenn das Fahrzeug an der Führungskreuzung ein Linksabbiegen durchführt, falls es eine Vielzahl von Spuren gibt, von denen das Linksabbiegen verfügbar ist, und die empfohlene Spur eine Spur ganz links unter der Vielzahl der Spuren ist, von denen das Linksabbiegen verfügbar ist, und
> einer Vereinfachungsverarbeitungseinrichtung (31), die zur Steuerung der Führungsverarbeitungseinrichtung (31) eingerichtet ist, um eine Spurführung an dem Navigationspunkt durchzuführen, falls bestimmt wird, dass die Spurplanung durch den Benutzer an der Führungskreuzung nicht einfach durchgeführt werden kann, und die Spurführung an dem Navigationspunkt nicht durchzuführen, falls bestimmt wird, dass die Spurplanung durch den Benutzer an der Führungskreuzung einfach durchgeführt werden kann.

2. Navigationssystem nach Anspruch 1, wobei die Führungskreuzung-Bestimmungsverarbeitungseinrichtung zur Bestimmung, ob die Führungskreuzung eine Führungskreuzung ist oder nicht, an der eine Spurplanung einfach durchgeführt werden kann, in Abhängigkeit davon, ob die empfohlene Spur zwischen den Kreuzungen geändert wird oder nicht, an denen die Führungskreuzungen sich fortsetzen, eingerichtet ist.

3. Navigationssystem nach Anspruch 1, wobei die Führungskreuzung-Bestimmungsverarbeitungseinrichtung zur Bestimmung, ob die Führungskreuzung eine Führungskreuzung ist oder nicht, an der eine Spurplanung einfach durchgeführt werden kann, beruhend auf der Entfernung eingerichtet ist, die zum sich Bewegen zwischen Spuren zwischen den Kreuzungen erforderlich ist, an denen sich die Führungskreuzungen fortsetzen.

4. Navigationssystem nach Anspruch 1, ferner mit:

einer Spurerfassungsverarbeitungseinrichtung, eingerichtet zur Erfassung einer Fahrspur an dem aktuellen Ort, wobei die Vereinfachungsverarbeitungseinrichtung zur Durchführung einer Spurführung nur dann eingerichtet ist, wenn das Fahrzeug nicht in die empfohlene Spur hinein fährt, obwohl es sich der Führungskreuzung nähert.

5. Navigationsverfahren, das eine aktuelle Ort-Erfassungseinheit (15, 18, 44) zur Erfassung des aktuellen Orts eines Fahrzeugs und eine Führungsverarbeitungseinrichtung (31) zum Suchen einer gesuchten Route bis zu einem Ziel beruhend auf dem aktuellen Ort des Fahrzeugs zur Durchführung einer Navigation verwendet, mit

einem Schritt des Suchens einer gesuchten Route bis zu einem Ziel beruhend auf dem durch die aktuelle Ort-Erfassungseinheit erfassten aktuellen Ort des Fahrzeugs,
einem Schritt des Einstellens einer Führungskreuzung beruhend auf der gesuchten Route,
einem Schritt des Einstellens von Navigationspunkten an vorbestimmten Punkten vor der Führungskreuzung,
einem Schritt des Durchführens einer Navigation hinsichtlich der Führungskreuzung, wenn das Fahrzeug einen Navigationspunkt erreicht, und
einem Schritt des Berechnens einer empfohlenen Spur auf jeder Straße der gesuchten Route beruhend auf der gesuchten Route ,und
einem Schritt des Bestimmens ungeachtet davon, auf welcher Spur das Fahrzeug gerade fährt:

dass die Spurplanung durch einen Benutzer an der Führungskreuzung nicht einfach durchgeführt werden kann, wenn das Fahrzeug ein Rechtsabbiegen an der Führungskreuzung durchführt, falls es eine Vielzahl von Spuren gibt, von denen das Rechtsabbiegen verfügbar ist, und die empfohlene Spur nicht die ganz rechte Spur sondern eine andere Spur als die ganz rechte Spur unter der Vielzahl der Spuren ist, von denen das Rechtsabbiegen verfügbar ist, oder wenn das Fahrzeug ein Linksabbiegen an der Führungskreuzung durchführt, fall es eine Vielzahl von Spuren gibt, von denen das Linksabbiegen verfügbar ist, und die empfohlene Spur nicht die ganz linke Spur sondern eine andere Spur als die ganz linke Spur unter der Vielzahl der Spuren ist, von denen das Linksabbiegen verfügbar ist, und
dass die Spurplanung durch einen Benutzer an der Führungskreuzung einfach durchgeführt werden kann, wenn das Fahrzeug ein Rechtsabbiegen an der Führungskreuzung durchführt, falls es eine Vielzahl von Spuren gibt, von denen das Rechtsabbiegen verfügbar ist, und die empfohlene Spur eine ganz rechte Spur unter der Vielzahl der Spuren ist, von denen das Rechtsabbiegen verfügbar ist, oder wenn das Fahrzeug an der Führungskreuzung ein Linksabbiegen durchführt, falls es eine Vielzahl von Spuren gibt, von denen das Linksabbiegen verfügbar ist, und die empfohlene Spur eine ganz linke Spur unter der Vielzahl der Spuren ist, von denen das Linksabbiegen verfügbar ist,
wobei die Spurführung an dem Navigationspunkt durchgeführt wird, falls bestimmt wird, dass die Spurplanung durch den Benutzer an der Führungskreuzung nicht einfach durchgeführt werden kann, und
wobei die Spurführung an dem Navigationspunkt nicht durchgeführt wird, falls bestimmt wird, dass die Spurplanung durch den Benutzer an der Führungskreuzung einfach durchgeführt werden kann.

## Revendications

1. Système de guidage routier comprenant :

une unité de détection d'emplacement actuel (15, 18, 44) adaptée pour détecter l'emplacement actuel d'un véhicule ;

un moyen de traitement pour la recherche d'itinéraire (31) adapté pour effectuer la recherche d'un itinéraire recherché jusqu'à une destination sur la base dudit emplacement actuel ;

un moyen de traitement pour le réglage d'intersection de guidage (31) adapté pour régler une intersection de guidage sur la base dudit itinéraire recherché ;

un moyen de traitement pour le réglage de point de guidage routier (31) adapté pour régler un point de guidage routier au niveau d'un point prédéterminé avant ladite intersection de guidage ;

un moyen de traitement pour le calcul de voie recommandée adapté pour calculer la voie recommandée au niveau de chacune des routes sur ledit itinéraire recherché sur la base dudit itinéraire recherché ;

un moyen de traitement de guidage (31) adapté pour effectuer le guidage routier concernant ladite intersection de guidage lorsque le véhicule atteint ledit point de guidage routier, où ledit moyen de traitement de guidage comporte un moyen de traitement pour la détermination d'intersection de guidage (31) adapté pour déterminer, indépendamment de la voie sur laquelle le véhicule se déplace :

que la planification de voie ne peut pas être facilement effectuée par un utilisateur au niveau de l'intersection de guidage, lorsque le véhicule fait un virage à droite au niveau de l'intersection de guidage, s'il existe une pluralité de voies à partir desquelles le virage à droite est accessible et la voie recommandée n'est pas une voie située à l'extrême droite mais une voie autre que la voie située à l'extrême droite parmi la pluralité de voies à partir desquelles le virage à droite est accessible, ou lorsque le véhicule fait un virage à gauche au niveau de l'intersection de guidage, s'il existe une pluralité de voies à partir desquelles le virage à gauche est accessible et la voie recommandée n'est pas une voie située à l'extrême gauche mais une voie autre que la voie située à l'extrême gauche parmi la pluralité de voies à partir desquelles le virage à gauche est accessible, et

que la planification de voie peut être facilement effectuée par un utilisateur au niveau de l'intersection de guidage, lorsque le véhicule fait un virage à droite au niveau de l'intersection de guidage, s'il existe une pluralité de voies à partir desquelles le virage à droite est accessible et la voie recommandée est une voie située à l'extrême droite parmi la pluralité de voies à partir desquelles le virage à droite est accessible, ou lorsque le véhicule fait un virage à gauche au niveau de l'intersection de guidage, s'il existe une pluralité de voies à partir desquelles le virage à gauche est accessible et la voie recommandée est une voie située à l'extrême gauche parmi la pluralité de voies à partir desquelles le virage à gauche est accessible ; et

un moyen de traitement pour la simplification (31), qui est adapté pour commander le moyen de traitement de guidage (31) afin d'effectuer le guidage de voie au niveau du point de guidage routier s'il est déterminé que la planification de voie ne peut pas être facilement effectuée par l'utilisateur au niveau de l'intersection de guidage, et de ne pas effectuer le guidage de voie au niveau du point de guidage routier s'il est déterminé que la planification de voie peut être facilement effectuée par l'utilisateur au niveau de l'intersection de guidage.

2. Système de guidage routier selon la revendication 1, dans lequel ledit moyen de traitement pour la détermination d'intersection de guidage est adapté pour déterminer si ladite intersection de guidage est une intersection de guidage où une planification de voie peut être facilement effectuée ou non selon que la voie recommandée soit modifiée ou non entre les intersections où lesdites intersections de guidage continuent.

3. Système de guidage routier selon la revendication 1, dans lequel ledit moyen de traitement pour la détermination d'intersection de guidage est adapté pour déterminer si ladite intersection de guidage est une intersection de guidage où une planification de voie peut être facilement effectuée ou non sur la base de la distance nécessaire pour se déplacer entre des voies entre les intersections où lesdites intersections de guidage continuent.

4. Système de guidage routier selon la revendication 1, comprenant en outre :

un moyen de traitement pour la détection de voie adapté pour détecter une voie de conduite au niveau dudit emplacement actuel, où ledit moyen de traitement pour la simplification est adapté pour effectuer un guidage de voie seulement au cas où le véhicule n'entre pas dans ladite voie recommandée même s'il s'approche de ladite intersection de guidage.

**5.** Procédé de guidage routier utilisant une unité de détection d'emplacement actuel (15, 18, 44) permettant de détecter l'emplacement actuel d'un véhicule, et un moyen de traitement de guidage (31) permettant d'effectuer la recherche d'un itinéraire recherché jusqu'à une destination sur la base de l'emplacement actuel du véhicule afin d'effectuer un guidage routier, comprenant :

une étape consistant à effectuer une recherche d'un itinéraire recherché jusqu'à une destination sur la base de l'emplacement actuel du véhicule détecté par ladite unité de détection d'emplacement actuel ;

une étape consistant à régler une intersection de guidage sur la base de l'itinéraire recherché ;

une étape consistant à régler des points de guidage routier au niveau de points prédéterminés avant l'intersection de guidage ;

une étape consistant à effectuer le guidage routier concernant ladite intersection de guidage lorsque le véhicule atteint un point de guidage routier ; et

une étape consistant à calculer une voie recommandée au niveau de chacune des routes sur ledit itinéraire recherché sur la base dudit itinéraire recherché, et

une étape consistant à déterminer, indépendamment de la voie sur laquelle le véhicule se déplace :

que la planification de voie ne peut pas être facilement effectuée par un utilisateur au niveau de l'intersection de guidage, lorsque le véhicule fait un virage à droite au niveau de l'intersection de guidage, s'il existe une pluralité de voies à partir desquelles le virage à droite est accessible et la voie recommandée n'est pas une voie située à l'extrême droite mais une voie autre que la voie située à l'extrême droite parmi la pluralité de voies à partir desquelles le virage à droite est accessible, ou lorsque le véhicule fait un virage à gauche au niveau de l'intersection de guidage, s'il existe une pluralité de voies à partir desquelles le virage à gauche est accessible et la voie recommandée n'est pas une voie située à l'extrême gauche mais une voie autre que la voie située à l'extrême gauche parmi la pluralité de voies à partir desquelles le virage à gauche est accessible, et

que la planification de voie peut être facilement effectuée par un utilisateur au niveau de l'intersection de guidage, lorsque le véhicule fait un virage à droite au niveau de l'intersection de guidage, s'il existe une pluralité de voies à partir desquelles le virage à droite est accessible et la voie recommandée est une voie située à l'extrême droite parmi la pluralité de voies à partir desquelles le virage à droite est accessible, ou lorsque le véhicule fait un virage à gauche au niveau de l'intersection de guidage, s'il existe une pluralité de voies à partir desquelles le virage à gauche est accessible et la voie recommandée est une voie située à l'extrême gauche parmi la pluralité de voies à partir desquelles le virage à gauche est accessible ;

où le guidage de voie au niveau du point de guidage routier est effectué s'il est déterminé que la planification de voie ne peut pas être facilement effectuée par l'utilisateur au niveau de l'intersection de guidage ; et

où le guidage de voie au niveau du point de guidage routier n'est pas effectué s'il est déterminé que la planification de voie peut être facilement effectuée par l'utilisateur au niveau de l'intersection de guidage.

FIG. 1

FIG. 2

FIG. 3

START

S1 — HAS THE CURRENT LOCATION REACHED THE FIRST ROUTE-GUIDANCE POINT?

N

Y

S2 — WILL LANE PLANNING BE DIFFICULT AT NEXT GUIDANCE INTER-SECTION?

N

Y

S4 — IS THE SELF-VEHICLE NOT TRAVELING IN THE RECOMMENDED LANE EVEN THOUGH APPROACHING THE GUIDANCE INTERSECTION?

N

Y

S6 — LANE GUIDANCE IS NOT PERFORMED WITH VOICE

S5 — LANE GUIDANCE IS PERFORMED WITH VOICE

S3 — LANE GUIDANCE IS PERFORMED WITH VOICE

END

FIG. 4

FIG. 5

FIG. 6

BEEP-BEEP

SOON, TURN TO THE LEFT
DIAGONALLY. AFTER-
WARDS TURN TO
THE RIGHT.

IN ABOUT 300m TURN TO
THE LEFT DIAGONALLY.

BEEP-BEEP

IN ABOUT 300m TURN
TO THE LEFT AA

SOON, TURN TO THE LEFT.
600m AFTERWARDS TURN
TO THE LEFT DIAGONALLY.

FIG. 7

cb r14

BEEP-BEEP

h18

c12

ca

r13

30 [m] h17 — TURN TO THE DIAGONALLY.

100 [m] h16 — SOON, TURN TO THE LEFT DIAGONALLY. AFTERWARDS IMMEDIATELY TURN TO TEH RIGHT.

300 [m] h15 — IN 300m TURN TO THE LEFT DIAGONALLY. AFTERWARDS IMMEDIATELY TURN TO THE RIGHT.

ha — (NOW ENTERING THE RECOMMENDED LANE)

r12
h14
600 [m] — IN 600m TURN TO THE LEFT DIAGONALLY. THE SECOND FROM THE RIGHT IS THE RECOMMENDED LANE.

c11

h11    h12

r11    h13 — TURN TO THE LEFT.

SOON, TURN TO THE LEFT. AFTER TURNING TO THELEFT, THE SECOND FROM THE RIGHT IS THE RECOMMENDED LANE.

IN 300m TURN TO THE LEFT. AFTER TURNING TO THE LEFT, THE SECOND FROM THE RIGHT IS THE RECOMMENDED LANE.

FIG. 8

FIG. 9

FIG. 10

FIG. 11

BEEP-BEEP

BEEP-BEEP

c21

r23

h36  h37
ca

cb

r22

30 [m]
h34    h35

SOON, TURN TO THE LEFT.

100 [m]

(NOW ENTERING THE
RECOMMENDED LANE)

hb

SOON, TURN TO THE RIGHT. 200m
AFTERWARDS TURN TO THE
LEFT AT BB.

300 [m]
h33

IN ABOUT 300m TURN TO
THE RIGHT. THE LEFTMOST
IS THE RECOMMENDED LANE.

crl       r24
400 [m]

BEYOND THE INTERSECTION
THE RECOMMENDED LANE IS
CHANGED TO THE LEFTMOST.

h32

Rtll      r21

IN ABOUT 600m TURN TO THE
RIGHT. THE CURRENT LANE
IS THE RECOMMENDED LANE.

700 [m]

h31

FIG. 12

FIG. 13

c31

r32

h54

30 [m]

BEEP-BEEP

h53

100 [m]

SOON, TURN TO THE RIGHT.
THE RIGHTMOST IS THE
RECOMMENDED LANE.

Rt21

h52

300 [m]

IN ABOUT 300m TURN
TO THE RIGHT. THE
RIGHTMOST IS THE
RECOMMENDED LANE.

r31

h51

700 [m]

IN ABOUT 700m
TURN TO THE RIGHT.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7098233 A
- US 20010049582 A1
- EP 0803853 A
- EP 1072863 A